# EUROPEAN PATENT SPECIFICATION

(11) **EP 2 469 292 B1**
(45) Date of publication and mention of the grant of the patent: **08.02.2017**
(21) Application number: 10196316.3
(22) Date of filing: 21.12.2010
(51) Int. Cl.: G01S 5/02

(54) **Location estimation by observing wireless signals**
Standortschätzung durch Beobachtung drahtloser Signale
Évaluation d'emplacement par l'observation de signaux sans fil

(43) Date of publication of application: 27.06.2012
(73) Proprietor: u-blox AG, 8800 Thalwil (CH)
(72) Inventor: Yule, Andrew, Reigate, Surrey RH2 9QQ (GB); Marshall, Chris, Reigate, Surrey RH2 9QQ (GB)
(74) Representative: O'Callaghan, Robert James

(56) References cited:
- WO-A1-2009/141660
- WO-A1-2010/141934
- WO-A2-2007/056738
- US-A1- 2007 081 496

## Description

This invention relates to a method and apparatus for estimating the location of an electronic device based on observations of wireless signals detectable by the device in its vicinity, and the identity of the transmitter(s) of those signals.

It has previously been proposed to provide a location beacon database to function as a positioning system. If the beacons are WiFi (WLAN) access points (APs), such a database contains their MAC addresses, known or estimated positions of the APs, and possibly their power profiles - that is, what signal strength can be expected at various locations around the AP. The database is usually populated by carrying out so-called "war-drives", gathering at known locations the identities of APs sighted and measurements of the AP signal strengths, and possibly other signal data (e.g. Doppler, error rate). The locations at which the APs are detected may be determined by a Global Positioning System (GPS) receiver.

Because of the burden of carrying out a "war-drive" exhaustively traversing an area of interest, it is usual for the responsibility for building the database to be shared among contributors, who are typically private individual hobbyists. In these circumstances, there is a heavy bias in the data sample towards the routes and locations most often frequented. This so called "arterial bias", introduces systematic inaccuracies into the deduced AP locations.

The database is used when a user requires a position fix. The process of finding a fix is typically as follows, according to the prior art:
(i) scan for observable APs, with their signal strengths and other signal data;
(ii) look up reference data about the location and possibly power profile of these APs in the database; and
(iii) derive the estimated user position.

However, this approach requires a large amount of data analysis. Sufficient sample data must be gathered to enable the location of each AP to be estimated or inferred, before it can be used to assist in determining location. Consequently, small sets of data relating to the detection of AP signals cannot reliably be used.

WO 2010/015854 discloses a portable navigation device which uses a wireless beacon-based positioning system to augment a GPS positioning receiver. This device intelligently collects observations about the wireless environment, so that, when GPS satellites are unavailable, it has a self-prepared database of wireless beacons which can be used to estimate position. In essence, this portable navigation device performs its own selective "war-drive" - for example, by sampling the wireless environment when it expects that it may lose GPS reception. WO 2010/015854 discloses that the self-prepared, individual database of observations made by the device can be shared with other users/devices. However, it teaches that, wherever possible, individually collected data should be used instead of the shared data when calculating position estimates, since observations collected by the user's own device are likely to be more relevant to their usual geographical movements. The device of WO 2010/015854 does not need to infer the location of each wireless beacon - it uses the locations from which the beacons were observed as its reference locations.

WO 2009/141660 describes a method of determining location by matching and scoring records in a database of wireless communication devices.

According to an aspect of the present invention, there is provided a method of estimating the position of an electronic device, according to claim 1.

The present inventors have recognised that is advantageous to combine observations that have been made by different devices in a more sophisticated manner than that suggested by WO 2010/015854.

According to embodiments, the method considers the quality of each match jointly with the indications of the origin of the respective matched record. In other words, the estimated position will depend both upon how good each match is and upon the properties of the device (or devices) that contributed to the record. The present inventors have recognised that when multiple (matched) records are available for use in estimating position, the attributes of the device and the internal context in which it created the record should be taken into account, together with the quality of the match. The source of a record may be indicated by a property, configuration, or state of the contributing device when it created the record. Important aspects of internal context and properties can be captured by studying intrinsic attributes of a contributor (for example, attributes of the device, user, or software responsible). The method enables the available information to be exploited to the greatest possible extent. The quality of the match can imply a certain level of confidence in the resulting position estimate. Likewise, the source of the data in the record can imply a certain level of trust that the data is an appropriate or relevant starting point from which to estimate the position of the electronic device. The method combines both types of information, which can enable it to produce more accurate position estimates - particularly in the case where information of the two different types is in conflict.

In this context, "conflict" between the two different types of information arises when one type suggests one course of action and the other type suggests another. For example, if only the source of the two records is considered, one would usually seek to use a record generated by the same device in preference to a record generated by another device. However, the quality of the match for the latter record may be much higher, suggesting that this match should be relied upon instead of the same-device match. This is an example of a conflict between the quality characteristics and the indications of source.

The position information contained in a set of records will often be incomplete or contain errors. Causes of this may include a scarcity of observations; incomplete geographic coverage (that is, no observations in certain areas); and lack of reproducibility (for example, because transmitters have moved, been activated or deactivated). Likewise, there will always be a degree of uncertainty about the accuracy of the positions stored in the records (for example, because of measurement error).

The present invention attempts to improve the accuracy of position estimation by making optimal use of this limited, imperfect information.

An indication of the source of a record can be implicit or explicit. For example, the record itself may explicitly identify its source (such as the identity of a device which was responsible for generating it). Alternatively, the source of the record may be implicit in the way the record is stored or the way in which it is obtained. For example, the electronic device may have internal data storage means, in which it stores records comprising its own previous observations of wireless transmitters. Establishing the source of these records does not require a label, because it is implicitly known that any record in the internal data storage was generated by the device itself. In summary, the present method discriminates among records according to their sources; however, the source can be established in a wide variety of different ways.

According to some embodiments, the first record is stored in a first database and the second record is stored in a second database. The indication of the source of the record may therefore comprise an indication of the database in which the record is found. The second database is preferably a shared database, which is used by a group of devices to share their observations of the wireless environment. The first database may be an individual database, which is used by the electronic device to store the history of its own observations of the wireless environment. Thus, the databases are populated according the different sources of the records. The first database comprises records relating to one source, or set of sources; the second database comprises records relating to another source or set of sources. Indicating the identity of the database from which a match was retrieved is therefore equivalent to indicating the source of the record.

The present method then enables the intelligent integration of observation records in the first database (for example, observations generated by the device itself) with those shared by other devices (the second database). The method allows more optimal use of the available data, because the position estimate takes into consideration the characteristics of each match, instead of making a blind selection on the basis of which database the records were retrieved from (as proposed in WO 2010/015854). The quality characteristic can measure the specificity (or uniqueness) of the match. For example, the characteristic can capture the relative degree of certainty or uncertainty about the correctness or geographic accuracy of the match.

Herein, the word "database" is used to mean a set comprising a plurality of records. The set of records which makes up a database may be grouped physically or logically. Thus, for example, two different databases may be stored in the same physical storage device, as (logically) distinct subsets of records. Alternatively, two databases may be stored as separate physical databases, in different storage devices. In general, databases may be stored and accessed either locally or remotely (that is, from the same device, or between different devices).

The first database may preferably be a same-device, personal or private database. In other words, each record in the first database may comprise the identity of one or more wireless transmitters and the corresponding position may be based on a location at which the one or more transmitters were detected by the electronic device whose position is to be estimated. The first database is then inherently customized to the usage-pattern of the individual device because it contains only one set of observations - that is, those observations collected by the device itself. Such a database represents a history of the geographical movements of that device only.

Note that, in some embodiments, the position associated with a record is identically a location at which the one or more wireless transmitters were detected. In other embodiments, the position stored in the record may be different from a precise location where the transmitters were detected. For example, if a user-device detects a given transmitter repeatedly in different locations, the record may contain a position which is the average of these locations. In another example, the record may contain a position that is an estimate of the position of the transmitter itself, wherein the estimate of transmitter position has been inferred from one or more locations at which a device detected the transmitter's signals. In both these examples, the position stored in the record is not identical to any of the specific locations at which the transmitter was detected, but is nevertheless based on them.

Where a record comprises the identity of more than one transmitter, it is not essential that all of these transmitters were observed by a single device, at a single place and time. Isolated observations may be aggregated into a smaller number of records. For example, if one device observes a transmitter T1 at a location P1 and another device observes a transmitter T2 at a nearby location P2, this may be represented by a record which contains the identities {T1, T2}, associated with a position P, where P is based on P1 and/or P2. The position P stored in the record might be: the average of P1 and P2; a quantized version of P1 and/or P2; or may be based on P1 and/or P2 in some other way.

The group of devices contributing to a shared, second database may preferably include the individual device. Alternatively, the second database may be constructed using devices in a group to which the individual device belongs, but wherein only records contributed by the other devices in the group are used by the individual device. (For example, because the records of the individual device itself are already considered in the first database, so there is no need to duplicate them in the second database).

In some embodiments, both the first and second databases are shared databases, populated with records generated by multiple different devices. Optionally, the contents of the first database may correspond to a smaller, more limited or more specific group, whereas the contents of the second database may correspond to a broader, larger or less-specific grouping. The more specific grouping associated with the first database is chosen so as to be more relevant to the observations of the electronic device whose position is to be estimated.

More generally, the first and second database can merely comprise different sets of records, wherein the different sets have (or are expected to have) different relevance to the observations of the electronic device in question.

Relevance to the observations of the subject electronic device is typically established by a group of contributor devices (or their users) having some attribute in common with the electronic device, such as devices built with similar hardware, running similar software or used in a similar way; or users who have similar movement patterns (as already mentioned previously, above). Therefore, the indication of the source of a matched record may indicate that the record came from a device that is similar to the subject electronic device in one of these ways.

The more selective the group, the more specific it is (in terms of locations visited and/or properties of the device), and so the more likely it is that a position estimate based on the records of similar such devices corresponds closely to the actual position of the device.

The more general the group is, the higher the chances of a match among records of that group (that is, there is a greater likelihood that a given wireless transmitter or set of transmitters will have been seen before). Therefore, there is more likely to be information that can lead to a position estimate, and that position estimate is likely to be based on more observations and potentially therefore more exact. However, such an exact estimate based on shared or generic data might be incorrect or misleading for the particular individual device, because of its different properties or usage.

The first and second matches, between the observation and respective first and second records may be unique (that is, matching identically) or partial (non-unique) matches. A partial match could be determined where more than one transmitter is detected (in the observation), but only a subset of the transmitter-identities match a given record. Conversely, one or more transmitters may be detected, but no record is found containing only those transmitters (and no others). Alternatively, a partial match could be defined for a single detected transmitter, wherein the identity of the transmitter matches the identity of a single transmitter in a stored record to a limited extent.

A joint consideration of quality characteristics of the matches together with the source of the match enables the information stored in the records to be combined in more subtle ways, making fuller use of the available knowledge, when calculating the position estimate. By considering the different records carefully, inferences can be drawn about the best way to deduce the device's position. This can lead to improved precision in position estimation.

At least one of the first and second indications may comprise a label in the respective matched record.

Each match may be retrieved along with a label indicating the database (or type of database) to which the corresponding matched record belongs - or a label indicating the source from which the record was contributed. This can facilitate an implementation in which all the records are stored in a single, unified database and each record is annotated with an indication of the device; software; username; or group (among others) with which the record is associated. Other examples of useful labels may include device serial number, manufacturer code, model type number, and software version number. Then, instead of two separate queries to two separate databases, the method can simply compare the observation with the contents of the single, unified database. All the matches found in this database will be retrieved; however, the labels associated with each match will enable them to be treated differently when estimating the position of the electronic device. In this case, the label associated with each record enables separate logical databases to be defined, even though all the records may be stored in the same physical database. Indeed, this implementation may be more flexible than storing the records in disjoint databases, because the definition of each database (that is, the assignment of records to the database) or selection of which sources of data to use can be modified simply by adjusting the way the labels are interpreted. For example, if each record contains a label indicating the identity of the user-device which was responsible for creating the record, then the first database could be defined by selecting only (matching) records which have the same user-device label as the electronic device.

The method may further comprise, before the step of comparing the observation with the contents of the second, shared database, selecting the second, shared database from among a plurality of possible shared databases. Put another way, the method may comprise selecting a set of records with which the observation should be compared, before performing the comparison. This selection may be made according to the indications of the sources of the records.

The selection may additionally be made in dependence upon external information (that is, other than information about the source), whereby a different set of records may be selected according to different situations. This external information may include information about the temporal context, such as a date; day of the week; or time of day. To facilitate this further, a record may additionally comprise data providing such "external" contextual information about the circumstances in which it was generated - for example a time-stamp annotation indicating the time that the observation was made. This can then be compared with the information about the external context of the current observation to select records.

Here, a distinction can be drawn between an indication of source, on the one hand, and temporal context, on the other hand. An indication of source represents the "internal" or "intrinsic" context in which a record was generated, and is particular to a contributor - specific information describing a device; user; or software application, for example. Temporal context is part of the "external" or "extrinsic" context of a contribution - the information that is common to all devices, including time and environmental attributes like ambient temperature, and so on.

In one instance, the second database could be defined by selecting records associated with business-colleagues of the user of the electronic device. However, on a different occasion, the second database could be defined by selecting records associated with the family and friends of the user of the electronic device. This flexibility recognises that geographic data from different groups may be appropriate to a given user for different purposes.

In general, the quality characteristic of each match depends on the similarity between the set of currently observed identities and the identities found in the matched record.

The quality characteristic of the first match and second match may comprise a measure of how specific each match is, preferably comprising at least one of: a degree of similarity between the set of at least one identity comprised in the observation and the set of one or more identities comprised in the matched record; and a degree of geographic precision implied by the match.

The degree of geographic precision may be based - at least in part - on the number of different transmitters that are matched (between the observation and the record). In general, the greater the number of transmitters detected, the more precise the position estimate, because of the implication that the device is located at an intersection between the coverage patterns of all the transmitters observed. In addition or alternatively, the degree of geographic precision may be based on knowledge of the extent of geographic coverage of individual transmitters. For example, detection of a micro-cell or pico-cell in a cellular network implies a higher degree of geographic precision than detection of a macro-cell.

As the present inventors have recognised, differences in the specificity of the match can be exploited to give more refined control of how matches from different databases are combined. A more specific match may be preferred, even if the source of the corresponding record is less closely related to the subject electronic device. Likewise, in an implementation using two databases, a more specific match in the more generic of the two databases may override the preference to use the more personalised database.

The identity of each transmitter may have a hierarchical structure, whereby successive levels of the hierarchy correspond to successively more limited geographic areas; and the measure of specificity of the match may be based on the degree of similarity between the hierarchical identity of the at least one transmitter in the observation and hierarchical identity of the one or more transmitters in the matched record.

An example of a hierarchical identity is the Cell Global Identification (CGI) a cellular telephone system such as GSM. This is composed of a set of code numbers, indicating the country; network; area; and finally individual cell identity. For a full or unique match, the same cellular base station must be detected - in this case, every element of the identity matches, between the observation and database record. However, all the base stations in a particular geographic region share the same code for area (Local Area Code - LAC). Therefore, detection of a base station with same LAC gives rise to a partial match. Detection of a base station with different Cell Identity (CI) and LAC, but in the same country (Mobile Country Code - MCC) is also a partial match, but is less specific than an area match, because it only indicates that the observed base station is located in the same country as the one referenced in the database record. In this way, the number of elements of the hierarchical identity which match can be used to determine the specificity of the match.

In general, the indication of the source of a record may indicate an individual, an item of hardware, or a piece of software which generated the record by making an observation of the wireless environment (or which caused the record to be generated in this way). It may equally indicate a group or class of related entities to which such an individual, hardware-device, or software-application belongs. In other words, the indication of source or origin of the record is information concerning who or what caused the record to be created. Software causing an observation to be made may be software running on the device which makes the observation, or may be a network service to which the device is connected (for example, in the case of a "thin client" type of device).

At least one of the first and second indications of source may indicate at least one of: the identity of one or more devices which contributed to the record by having detected the one or more transmitters at the location or set of locations; the identity of one or more software programs which caused said one or more devices to contribute the record and a group to which said one or more devices or software programs belong, wherein said group is preferably associated with at least one of: a type of said one or more devices or software programs; and a user or group of users with which said one or more devices or software programs are associated.

These provide different ways to establish an indication of the source of a record. As noted previously above, the indication of source may be determined implicitly or explicitly. When the indication indicates a group of devices, software applications, or users from which the record originates, the group preferably has attributes in common with the subject electronic device. This should result in the records of the group having greater relevance when estimating the position of the electronic device: if one or more members of the group have observed a given set of wireless transmitters when at a particular location, then when the electronic device observes the same set of transmitters, it is likely to be in the same place, for example because the device is either physically or electrically similar to or is used in a similar way to the devices of the group.

Groups of devices may therefore be characterised by the type of the device or by the type of user. Knowing the identity of a contributing device or having an indication of a group to which it belongs can therefore be a proxy for knowing something about the geographic usage pattern of the device or the properties of the device which may have affected how it contributed to the record (for example, how it detected the transmitters and how it obtained its position).

Groups of software applications might be characterised by the software provider, or by their purpose. For example, a set of business-related software applications might be grouped together, while games and media applications might form another group.

The present inventors have recognised that different devices, users and groups may observe the same transmitters from different positions. However, the same individual, or members of the same group are more likely to observe the same transmitters from the same position. This is one example of what is meant by the relevance of a record contributed from a particular source. In the foregoing example, the relevance arises because of devices being used in a similar geographic pattern. Relevance may also arise in other ways - for example, because of similar physical or electrical attributes of the device. This aspect of relevance will be described in further detail later below.

The first indication optionally indicates that the source of the first record is the electronic device itself; and preferably the second indication indicates that the source of the second record is one or more devices among a limited group of devices.

In this case, the first record is a same-device record and the second record is one shared by another device. The other device is preferably one of a limited group of devices, whose records are expected to be more relevant for calculating the position of the subject electronic device.

When the first and second indications suggest that the first record originates from a source that is more closely related to the electronic device than the source of the second record, if the second match is more specific than the first match, then the estimation of the position of the electronic device is based preferentially on the second position; otherwise the estimation is based preferentially on the first position.

If the first match is more precise than the second or if the two matches are judged to be equally precise, then the final position estimate is based preferentially on the first position. In other words, all else being equal, the first position (corresponding to the more closely related source) will have greater influence on the final position estimate. On the contrary, if the second match (which is based on the less closely related source) is more specific than the first, then it may be appropriate for the second position estimate to dominate the final position estimate. This provides one simple but useful and general heuristic for jointly considering the specificity of the match and its source.

The step of estimating the position of the electronic device may comprise a linear or non-linear combination of the first and second positions.

The position corresponding to each match may be assigned a priority, the priorities being based jointly on: the measure of specificity of the match; and the indication of the origin of the matched record (for example, the database from which the record comes). The step of estimating the position of the electronic device can then comprise selecting the position estimate having the highest priority. This is an example of a non-linear method of combination.

Alternatively, the position corresponding to each match may be assigned a weight, the weights being based jointly on: the measure of specificity of the match; and the indication of source. The step of estimating the position of the electronic device can then comprise calculating a weighted average of the position estimates according to the assigned weights. This is an example of a linear method of combination.

The first and second indications may suggest that the first record originates from a source that is relatively more closely related to the electronic device if the source device and the electronic device are part of a group of related devices expected: to have contributed database records for positions at approximately the position to be estimated; and/or to have contributed database records by making observations in approximately the same way as the electronic device.

In the first case, the group of devices may have a common purpose - for example, a group of tracking devices associated with a fleet of courier vehicles will be likely to visit repeatedly the addresses of their clients and the origins and destinations of consignments.

In the second case, the group of devices may have common components or may be used in a similar manner. The group of devices may be of the same physical type or form-factor; may have the same physical or electrical properties; or may be packaged in a similar body.

For example, all the portable navigation devices of a particular manufacturer may use the same antenna; radio chipset; or software calculations for making signal measurements. Since the signal observations are all made in the same manner, the observations made by one of the devices are more likely to match records contributed by another device of the same group, as compared with records contributed by another manufacturer's device. This should lead to more accurate matches, and therefore better position estimation.

This contrasts with known wireless beacon databases of the prior art, which have been generated by different users conducting "war-drives". In those databases, each contributor will have used different hardware to make the necessary signal measurements, without calibration or control, leading to unknown fluctuations in the data. Embodiments of the present invention can mitigate the effects of such fluctuations, by using records of similar devices where possible.

In another example, all laptop devices could be assigned to one group and all mobile phone devices could be assigned to another group. Since these devices are used in different characteristic orientations, and have different form factors, the signal observations they make may be different from one another. Likewise, they may be used in different locations (for example, a mobile phone may be switched on in a cinema or theatre, where a notebook computer is unlikely to be used). In addition, these different types of device may have different hardware and software components, as already noted above.

The class of devices from which the first record originates may be more tightly defined than a broader class of devices from which the second record originates, such that the records in the first database are expected to be more relevant than those of the second. Alternatively, the first and second databases may be expected to be equally relevant, but for different reasons or in different ways.

Alternatively, instead of being associated with a specific group or sub-group of devices, the second record may be generic - that is, it may contain any observation data from any device available.

The method may further comprise detecting a third match with a third record. In this case, the source of the third match may be a device that is unrelated to the subject electronic device. In the context of an implementation using first and second databases, the third match may be found in a third database. The third database may be global (that is, universal or generic), in that it contains records contributed by any device. That is, whereas the first and second databases may comprise selected records only, the third database may comprise all records available, without limitation to a specific device or specific group of devices. Accordingly, the first to third databases may be progressively larger and/or more general.

Note that different manufacturers or service providers might implement their own databases. In this case, two different providers may provide two different generic or "universal" databases. This should not be taken as a contradiction in terms - although neither database each database is strictly universal, because each will contain records unique to one provider, they are still generic databases in the sense that they incorporate all data made available by the respective provider, without discrimination.

The method may further comprise detecting multiple matches with records having the same indication of source; and estimating the position of the electronic device may be based on at least one of the corresponding multiple position estimates, depending upon quality characteristics of each of the multiple matches.

This extends the method to use multiple matches from the same source, when these are available.

The method may further comprise submitting data to the plurality of records, the data comprising: the observation; an estimate of the position of the electronic device; and preferably a label identifying at least one of: the electronic device; its type; or a group of devices to which it belongs.

This enables the set of records to be constructed or updated. The estimate of position may be calculated by means of wireless signal observations, as described above. Alternatively, the estimate may be obtained by other means. Preferably, a trusted estimate of position such as a GPS position fix is used, to ensure accuracy of the records.

Depending on the type of wireless transmitter observed, the signal environment in a particular location may change over time. For example, cellular base stations may be reconfigured, added or removed. Wireless LAN (WLAN / WiFi) hotspots may be turned on or off depending on the time of day, or may be moved from one site to another. In such cases, updates provided by devices in the field can help to ensure that the set of records remains accurate.

If a label is included with the submission, this can be used subsequently to identify how the data can best be used. Data submitted by a device may be used to construct a database consisting only of that device's own observations, for example. Likewise, having a label permits easy and adaptable definition of groups of devices whose observations should be used to construct a particular shared database.

As will be apparent to those skilled in the art, it may not be necessary to transmit a label with every submission of data from a device. For example, in the case of communication with a remote database, in order to reduce redundancy, the device may register its label with a database in an initial handshake or configuration stage. Then, any subsequent submissions from the same device would be assigned the same label. This can reduce the bandwidth of a communications link between the device and database, by avoiding repetition of labels.

The label may be submitted together with the observation and/or estimate of position, or separately. For example, the label could be provided in a separate configuration phase, and via a different interface. For example, a user may connect to a server computer separately and label his/her portion of the data at a different date or time from the date or time that the observation data was submitted.

A device may have multiple labels - for example, an individual label and one or more labels pertaining to groups to which the device belongs. A device may use a different label for submissions of records, according to context. For example, observations made while the device is connected to a corporate Virtual Private Network (VPN) could be stored with a "business" label; meanwhile, observations recorded while the device is being used to watch a movie or listen to music could be associated with a "leisure" label.

Also provided is a computer program comprising computer program code means adapted to perform all the steps of a method as described above if said program is run on a computer; and such a computer program embodied on a computer readable medium.

According to another aspect of the invention, there is provided a portable device, according to claim 13.

The portable device may be a personal navigation device. However, it could also be any other kind of device in which it is desired to implement positioning functionality. This might include, for example a mobile phone; vehicle or package tracking device; or a portable computer.

The portable device may further comprise an onboard memory, for storing the whole or part of the plurality of records.

Records stored in an internal memory may be those generated by the device itself, for example. The device may be also adapted to store the whole or part of a wider set of records, such as shared records from the second, shared database (or third database, respectively). Optionally, a master database may be stored remotely, and the device may be adapted to intermittently or periodically download updates to the database.

The invention will now be described by way of example with reference to the accompanying drawings, in which:
Fig. 1 is a flowchart of a method of estimating position according to a first embodiment of the invention;
Fig. 2 is a flowchart of a method according to a second embodiment;
Fig. 3 is a flowchart of a method according to a third embodiment;
Fig. 4 illustrates an apparatus according to an embodiment of the invention; and
Fig. 5 illustrates possible relationships between an observation comprising the identities of multiple wireless transmitters and partially matching database-records.

In the following exemplary embodiments, the invention will be described with reference to the storage of records in first and second databases. However, as already explained above, the invention is not limited to such embodiments. Retrieving records from first and second databases is merely one suitable way of establishing an indication of the source of the records, so that the records can be used appropriately in the method.

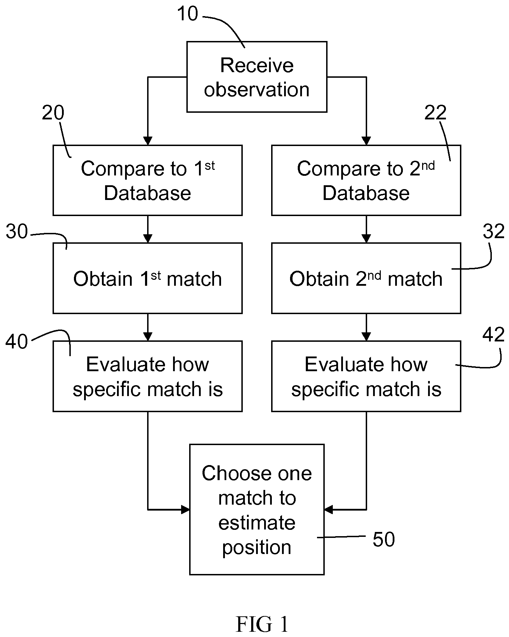

A method according to a first embodiment of the invention will now be described, with reference to Fig. 1. The method starts by receiving 10 an observation. The observation comprises the identity of one or more wireless transmitters detected by a user-device at a position which it is desired to estimate. The observation is compared 20 with the contents of a first database. This database comprises a plurality of records, each of which comprises the identity of a transmitter or transmitters detected at a different time, and the known position at which the detection occurred. Thus, each record in the database comprises an observation like the presently received observation, but with an associated position.

The method detects 30 a first match between the presently received observation and one of the records in the first database. The corresponding position stored in the database is retrieved, along with additional information about a characteristic of the match. Of course, if more than one record in the first database matches the observation, more than one match may be retrieved in this way.

The observation is also compared 22 with the contents of a second database, in a similar manner. This results in (at least) a second match 32, for which the associated position and match-characteristic are also retrieved. As shown in Fig. 1, the comparison 20, 22 and matching 30, 32 with the respective databases is performed in parallel, although this is not essential. The observation can also be compared with third database, to produce a third match, in the same way.

Using the retrieved characteristics of the retrieved matches, the method chooses 50 one of the matches to estimate the position of the user-device. In this embodiment, each match is evaluated 40, 42 to determined how specific it is, with respect to the observation. The choice of match to use for position estimation depends both on the specificity and on the database in which the match was made.

The first database comprises previous observations made by the user-device itself. The second database comprises observations made by other devices in a group to which the user-device belongs. The third database is a global database, comprising all records available, regardless of whether the device that made the observation had any similarity or relationship with the present user-device. In this way, the first to third databases are increasingly more comprehensive, but potentially less relevant to the needs of the present user-device.

In this example, the device is a tracking device attached to a parcel. The three databases are defined as follows:
1. All previous locations of the device (that is, the particular package in question);
2. All package locations (for the same shipping company);
3. All locations available for the shipping company (for example, including package labels, delivery vehicles, staff, and so on).

As will be apparent to those skilled in the art, additional levels (databases) could be defined. Intermediate levels of generality might include a more specific version of the second database, comprising all package locations of a certain size. At the most general level, an additional database could be defined which includes all records available to the location-service provider. This would include locations for other shipping companies as well as other types of user. Without loss of generality, in the following description, we will consider the case of three databases (or levels of database), as explained above.

In this embodiment, the electronic device observes cellular telephony base stations, such as Global System for Mobile Communications (GSM) base stations. Each Base Station (BS) broadcasts a Cell Global Identification (CGI). The composition of this is as follows:

{[MCC] [MNC] [LAC] [CI]}

A Mobile Network Code (MNC) is used in combination with a Mobile Country Code (MCC) to identify uniquely a mobile phone operator using the GSM, CDMA, iDEN, TETRA or UMTS public land mobile networks. (This identification system also applies to some satellite mobile networks.) Within each network, a set of location areas is identified by a common Location Area Code (LAC), which is a fixed two-octet number. The Cell Identity (CI) identifies the cell within a Location Area and is also a fixed two-octet number. The full CGI therefore globally identifies a cell.

The presently received observation may match a record in the database at the cell level, whereby the CGI of the base station matches identically, or partially, whereby only part of the hierarchical identifier matches. A partial match may include a matching MCC only; or a matching MCC and LAC. The more complete the match (in terms of the level to which the CGIs match), the more geographically specific it is.

It is assumed that the records in the first database are the most relevant or useful for establishing the device location. That is, the history of locations of the user-device is more relevant than the history of locations of other devices. However, when the device moves to a new location for the first time, there may be no match in the first database, or only a partial match. According to this embodiment, the specificity of the match (in terms of CGI) is combined with its origin (in terms of database) by using a table of joint priorities, as shown below:

| | **Cell** | **Area** | **Country** |
|---|---|---|---|
| **Individual** | 1 | 4 | 7 |
| **Group** | 2 | 5 | 8 |
| **All** | 3 | 6 | 9 |

As shown in this table, the top priority (1) is assigned to a cell-level match retrieved from the individual database (first database). In this event, the device has seen exactly the same base station before, and the position corresponding to that database record should be used to estimate the current position of the device. The next two preferences (2, 3) are cell-specific matches retrieved from the second and third databases (Group, All) respectively. If no cell-specific match is found in any of the three databases, the next highest priority is given to an area-level match in the first (individual) database. This means that device has seen a base station with the same MCC, MCC and LAC before; therefore, it is in the same region. The resulting position estimate may be less accurate than a cell-specific match; however, the inaccuracy may be limited, at least initially. For example, this situation may first arise when the device travels out of a first cell which it recognises, into a second, neighbouring cell, which is unrecognised, but shares the same LAC. According to the present embodiment, the position of the device will be reported as the location in the first cell where that base-station was observed, since this is the location stored in the database for that cell. The error in this estimate will be of the order of the size of one cell. This will typically be much more accurate than if a generic position estimate had been used - for example, based on the centroid of all observations (by other devices) which include the same LAC; or based on prior knowledge of the regions encompassed by the LACs for each cellular network. In this way, the present embodiment can provide improved position estimates that are more relevant to the pattern of movement of the individual device.

If the LAC has not been observed by the present device, the second database may have returned a match with a record generated by another device. Since the second database covers devices related to the present device (whose position is being estimated) it may also yield very relevant results. In the current example, another package carried by the same shipping company may previously have observed the same LAC. If that other package was following the same trajectory as the present package, the position estimate will turn out to be very accurate. In this way, the present embodiment prioritises the use of information so that the best possible position estimate can be provided.

In the first embodiment, described above, the position estimate was based on a non-linear combination of the position estimates of the matching records, by choosing between the matches on the basis of priority.

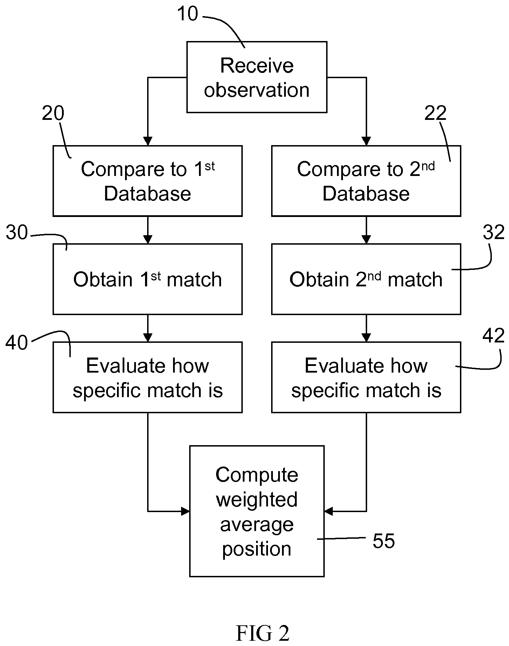

A method according to a second embodiment will now be described, with reference to Fig. 2. In this embodiment, the position estimate is based on a weighted linear combination of position estimates. As shown in Fig. 2, the steps of this method are identical to those of the first embodiment, as regards receiving 10 the observation; comparing 20, 22 with the databases; obtaining 30, 32 matches; and evaluating 40, 42 how specific each match is. The step 55 of estimating the position is different.

Instead of a table of joint priorities, as explained previously above, the second embodiment uses a table of weights, as follows:

| | **Cell** | **Area** | **Country** |
|---|---|---|---|
| **Individual** | 10 | 3 | 2 |
| **Group** | 3 | 1 | 1 |
| **All** | 2 | 1 | 1 |

The matches are then combined using a weighted average of the corresponding positions. Thus, for example, a cell-specific (exact) match with a record in the second (group) database attracts a weight of 3, while a partial match only to the extent of the LAC and in the same database attracts a weight of 1. Consequently, the position estimate will be based preferentially on the cell-specific match, as this will be weighted three times more heavily when calculating the average (for example, centroid) of the positions to which the matched records correspond.
Geographic matching is uncertain, and the wireless transmitters may have irregular and changing coverage patterns. For this reason, position estimates calculated by weighted averaging - as in this embodiment - may provide additional robustness and/or stability, because the estimated position is based on more than one record in the databases. Using weights also enables different types of information to be given equal influence. For example, in the table above, a matching LAC in the first (individual) database is given the same weight as a matching cell in the second (shared, group) database.

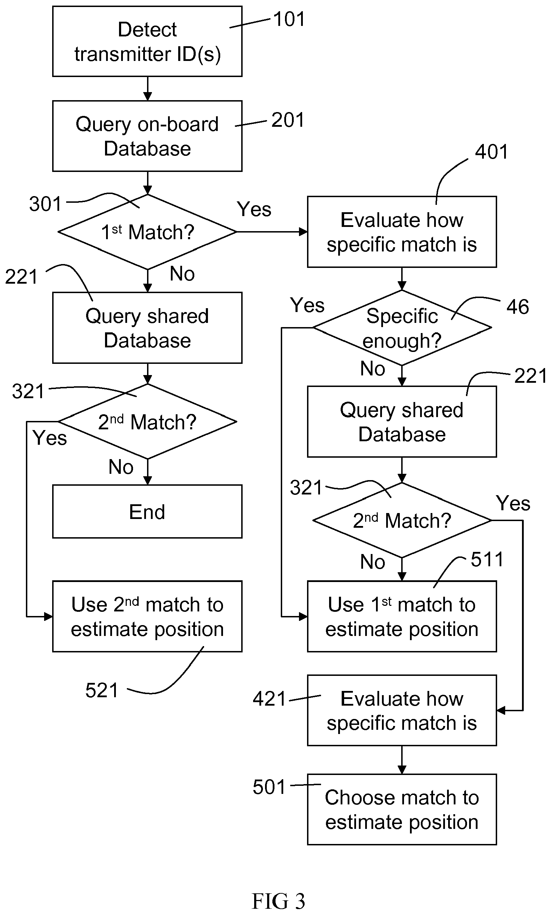

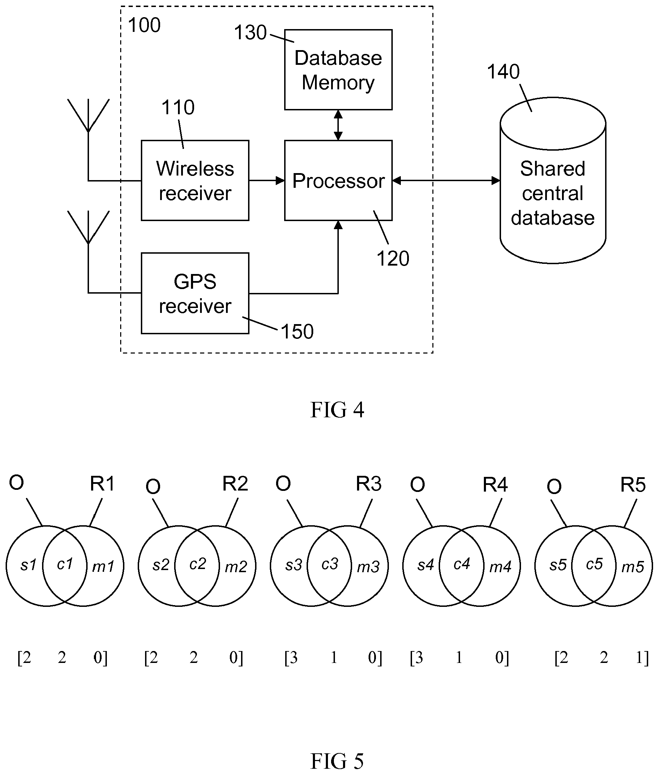

Fig. 3 illustrates a method according to a third embodiment of the invention. This embodiment uses heuristic rules to decide how to estimate the position, based on the available information. Like the first two embodiments, described already above, the method takes account of both the quality of the match and the database from which it came. According to this embodiment, the method of Fig. 3 is performed on board a portable Personal Navigation Device (PND), whose block diagram is shown in Fig. 4.

In step 101, the device 100 takes a sounding of the wireless environment, to detect and identify the transmitters from which signals are received. Wireless receiver 110 is used to make this observation. The resulting identities of wireless transmitters detected are provided to a processor 120.

The processor uses the set of identities to query 210 a first, on-board database 130, which stores the records of wireless observations made previously by the device (together with the corresponding positions at which the observations were made). The processor determines 301 if a match exists in the first database 130. If so, the method proceeds by evaluating 401 how specific this match is. This can be done in the same manner as for the first two embodiments: that is, the degree to which the CGI of the observed transmitter matches the CGI stored in the database is considered. The processor decides 46 if the match is specific enough - for example, if the match is a unique, cell-specific match, having exactly the same CGI. If it is, this first match is chosen 511 to estimate the position of the device.

If the first match is deemed not to be specific enough (for example, because it only matches to the extent of the LAC) then the processor 120 issues a query 221 to a second, separate database 140. In this example, the second database 140 is a generic, shared database, stored at a remote central server. The PND communicates with the server 140 using a wireless data connection, such as a WLAN, GPRS, or UMTS connection. The processor checks 321 if a match (hereinafter the second match) is received from the central database 140. If so, the processor evaluates 421 the specificity of this match. The processor now has available two matches - one from each database - with associated indications of how specific each match is. By comparing the specificity of the matches, the processor chooses 501 which match should be used as the basis for estimating the position of the PND. The selection may involve the use of a table of priorities, as described above for the first embodiment.

If, in step 301, there is no first match found in the first (on-board, custom) database, the method proceeds to a similar step 221, wherein the second, shared database is queried. If 321 there is no second match from the shared database, the method ends, because no matching records can be found in any database. If 321 a second match has been found, this match is used 521 to estimate the position of the PND. Since no first match has been found, in this branch of the method, there is no need to evaluate the specificity of the second match, or to choose a match for position estimation.

The method of this embodiment has been described with reference to a single match from either or both of the two databases. However, those skilled in the art will by now readily understand how the method can be extended to the case of multiple matches in each database.

The PND 100 of the third embodiment also comprises a GPS receiver 150. This is used in conjunction with the wireless receiver 110 to populate the on-board database memory 130 and also the shared central database 140. When GPS satellite reception is available, the device can measure its position using the GPS receiver 150. At the same time, the wireless receiver 110 detects signals from nearby wireless transmitters and identifies them. The identities and position are associated with one another and stored in the database 130. When the device next connects to the central, shared database 140, the new record can be uploaded to that database. The new record in the shared database can be annotated with a label which identifies the particular PND 100 which submitted it. This enables each PND to access only the records of other PNDs, when using the central database 140 for position estimation.

In a variation of this embodiment, the on-board database 130 is omitted and all records are stored in the shared database 140. With this variation, the first, custom database is composed of a logical subset of the records in the shared database - namely, those which are labelled as having been submitted by the same PND 100. In this case, the PND may transmit the current observation to the database server 140 as a query, together with a label identifying the particular PND making the request (and/or a group to which it belongs). This label enables the server to select the appropriate records to constitute each logical database.

In an alternative variation, part of or the whole of the shared database 140 may be stored in the memory 130 of the PND 100. This means that the PND 100 does not need to establish a data connection to the remote server 140 each time it wishes to query the shared database. Preferably, updates to the shared database are downloaded, or otherwise delivered, to the PND on-board memory 130 periodically.

It is expected that the databases would evolve over time. Thus, it is not necessary to provide at the outset a fully populated database of locations, and transmitters observable from those locations. Evolution of the databases will also help the system to adapt as the wireless environment changes - for example as transmitters appear and disappear. The following usage scenarios illustrate these points:
**Case 1.** At an early stage, when a user enters an area not previously visited by any other user.
   - The shared database consists of data from several different individual users, but without much overlap between users, because they make different journeys, and use the position estimation service and submit records to the database in different places.
   - In a particular usage location there is then little difference between the shared/aggregate database and the individual user's personal database.
   - The individual user's repeated usage then gives high priority and high weighting results, but this has little impact on the position estimates since limited data is available anyway, at this stage.
**Case 2.** In the medium term, there is a sparse database from a limited but increasing number of users, and the system is seeking clues about where the user is when the device goes into a possibly new area.
   - Any information is welcome
   - If the device has seen any of the information before - any match, even on a single cell identity or a LAC indicates that he is probably in the same place as when this signal was seen previously, and this is the best estimate of location.
   - If there is no match of any information from the device, then a match from a group-shared or general aggregate database (to whatever accuracy of information is available) is the best that can be done, and should be used.
**Case 3.** In the long term, lots of information will be available (possibly even conflicting information).
   - A match with a report of multiple cell descriptors at the same time is likely to correspond to a fairly limited geographic area, and so will be relatively accurate. This is true even if the database record originates from another user in a shared or aggregate database, rather than the individual database of the device itself.
   - So an aggregate generic match with a record which originated from another device may be preferable, compared with an individual match comprising a subset of the observed base stations or with a matching LAC.
   - A unique match with multiple previous observations from the user's own device would be better still.

The embodiments above have used the example of cellular base stations as the wireless transmitters used to localize the position of a device. The base stations were identified using CGI. However, for completeness, it is noted that cellular base stations may be identified in other ways. Each base-station also has its own Base Station Identity Code (BSIC). This code is at all times transmitted on the broadcast channel, so that Mobile Stations can distinguish between base stations. The BSIC is composed of a 3-bit Network Colour Code (NCC) and a 3-bit Base station Colour Code (BCC). The NCC is assigned to each network operator so that the MS can easily determine the BSs which it is allowed to access. The NCC of different providers accessible from a given location must be different. This includes locations near national borders, where BSs of providers in more than one country are accessible. The BCC of each base station is assigned by the network operator. They are chosen so that no neighbouring base stations have equal BCC and thus equal BSIC. The effect of this is that observing a given BSIC, although not a globally unique identifier of a particular cell, reduces the set of possible locations to a finite number of cells having the same NCC and BCC. If the BSICs of multiple base stations can be detected, these can be used to narrow the set of possibilities still further. With a sufficient number of detected BSICs, a method according to an embodiment may be able to narrow the range of possibilities down to a unique match in one or other of the databases. Assuming that this unique match originates from an individual or group database, there is good reason to suspect that the present position corresponds to that stored in the database record, even though there may in theory be other locations in the world where an identical set of BSICs could be observed.

Of course, as those skilled in the art will appreciate, transmitters of other kinds can also be used to locate a device, according to other embodiments. For example, WLAN ("Wi-Fi") Access Points (APs) can act as suitable wireless beacons, in a similar manner to the cellular base stations. Every AP has a unique Media Access Control (MAC) address, which can be discovered by a WLAN client communicating with the AP. In this example, therefore, the wireless receiver 110 in Fig. 4 would be a WLAN interface. Other suitable types of beacon may include FM radio transmitters, which typically transmit digital station identification information according to the Radio Data System (RDS) or another similar standard. Likewise, many other terrestrial and satellite broadcasts include identification information which could be used in other embodiments. In principle, any wireless signal (including electromagnetic waves of all types, and other free-space propagating signals such as acoustic vibrations) could be used, provided its source can be identified and it is receivable in a finite geographical area.

It is often possible to observe multiple wireless transmitters of any given type from a single location. In this case, it may be useful to compute a set-theoretic measure of similarity between the observed set of beacons and the set of identities stored in the database. This measure can be used instead of, or in addition to, the measure of specificity defined above for hierarchical identifiers such as CGI.

An example of such a measure is described in WO2009/141660, in the context of WLAN AP MAC addresses. For completeness, this method will be summarised here, with reference to Fig. 5. Fig. 5 shows a set of five Venn diagrams. Each Venn diagram describes a comparison between an observation O and a record Rn stored in the database. In each case, there are a number of common MAC addresses cn, which are the addresses which occur in both the database record and the observation - in other words the intersection of the two sets. There are also a number of surplus MAC addresses, sn, observed but not present in the database; and a number of missing MAC addresses, mn, present in the database but missing from the observation.

For each record, a score can be calculated. A weighting can be applied as follows:
- the number of MAC addresses in common weighs heavily in a positive way;
- the number of surplus MAC addresses counts weakly negatively; and
- the number of missing MAC addresses counts weakly negatively.

This gives the set of data variables shown in Fig. 5, as s1 to s5, c1 to c5 and m1 to m5 (s=surplus, c=common, m=missing). The number in brackets underneath is the corresponding number of elements. The best matches in the above example would be the first and second (from left to right), because they have 2 MAC addresses in common (c1=c2=2), with 2 surplus and 0 missing counting against them (c1=c2=2; s1=s2=2 m1=m2=0). The fifth example is a close second, having the same number of common and surplus MAC addresses, but it has one missing MAC address counting weakly against it.

When estimating the position of an electronic device, a method or apparatus according to an embodiment of the invention can take into consideration information from multiple different databases. This information can be combined in a manner that depends both on the particular database from which the data originated and the extent to which the observations made by the electronic device match the contents of the database. This means that if the some of the database records are reorganised, such that a record which was a member of one database is now assigned to a different database, a different estimate of position may be produced

While the invention has been illustrated and described in detail in the drawings and foregoing description, such illustration and description are to be considered illustrative or exemplary and not restrictive; the invention is not limited to the disclosed embodiments.

For example, it is possible to operate the invention in an embodiment wherein additional measurements are made as part of the observation by the electronic device whose position is to be estimated. These additional measurements may include signal strength measurements; measurements of signal-to-noise ratio; or error rates, among others. Such measurements could be applied to communications in either direction between the electronic device and the wireless transmitters. For example, the observation might include measurements of signal-strength profile for signals received at the device from each of the wireless transmitters; or it might include measurements of strength for signals received at each transmitter from the electronic device; or both. Of course, in the latter cases, some communication will typically be necessary between the transmitters which measure the signal strength and the device implementing the rest of the position estimation method.

Likewise, a record with which the observation is compared may comprise corresponding signal-strength measurements (in addition to the identities of a set of one or more transmitters and an associated position). This may enable more sophisticated ways of estimating the position of the electronic device. For example, if the positions of the transmitters themselves are known, then if the signal strength of a given transmitter is relatively high, the electronic device can be assumed to be relatively close to that transmitter. In another example, the quality characteristic of a match could comprise a measure of how similar the signal strength measurements (in addition to the identities of the transmitters) of the current observation are to a given record.

As will be apparent to those skilled in the art, embodiments can be implemented in a wide range of physical configurations. In some embodiments, an electronic device will sample the wireless environment to determine the identity of the visible wireless transmitters and will then transmit this observation to a remote server. The server will then implement the remainder of the position estimation method. All the databases may be stored at this remote server. Once the position has been determined the server may respond to the electronic device to provide the estimated position (for example, for personal navigation applications); or the server may simply append the latest position of the device to a log (for tracking applications). Such embodiments permit the use of very simple and low-power portable devices. Communication with the server may occur in real-time, via a wireless data communications link; alternatively, the observations may be stored on-board the electronic device for some period and later uploaded to the server. The latter implementation also facilitates off-line tracking applications, using a basic electronic device that simply records the wireless transmitters that it detects, over time. Once transferred to the server, the observations can be processed to provide a history of the device's movements.

Indeed, it is not even essential that the electronic device has the ability to determine the identities of the transmitters itself: the device could simply receive; digitise; and store a short segment containing any signals receivable in a particular frequency band of interest. An exemplary device adapted to do this might include a Radio-Frequency (RF) tuner; downconversion stage; analogue-to-digital converter; and memory to store the digitised Intermediate Frequency (IF) or baseband signal samples. Such a snapshot of the wireless environment could be processed later, to extract the identities of the transmitters whose signals are present in the snapshot. Naturally, the necessary length of the snapshot would vary depending on the type of transmitters of interest (for example depending on how often they transmit an indication of identity).

As explained in the described embodiments, it is also possible to implement the invention such that more of the method is executed by the portable navigation device. In the limit, all data and processing may reside in the portable device.

A possible enhancement to the method is the use of a time-dependent database. The use of a time-dependent database for wireless beacon positioning has been described in WO2009/141642. According to that method, the time that each observation is made is noted. Then, when comparing the observation with the reference records of the wireless environment, records that are associated with approximately the same time period as the time of the observation can be used. This reflects the fact that the wireless environment changes over time. For the most accurate results when an observation is processed to estimate position, the method should preferably compare it with the historical records of the environment as it was at the time the observation was made.

The same insight can be applied to, and combined with, the presently described methods. A record may further comprise an indication of the time when it was generated. The method may then comprise estimating the position in dependence upon the times of generation of the first and second records (in addition to their indications of source and the quality characteristics of the matches). For example, the position associated with each match may be weighted or prioritised more highly, according to its temporal proximity to the observation being processed. For real-time position estimation, this will result in basing the estimate preferentially on more recent records. For off-line position estimation (for example, where an observation is stored and processed later), this will result in the estimate being based preferentially on historical records that were generated close to the time of the observation.

In an embodiment, this may be implemented by multiplying a joint table of priorities (such as that shown previously above) by a value which has a direct relationship with the temporal difference between the observation and the record. The larger the temporal difference, the greater the multiplying factor will be. Since the highest priority is assigned to the lowest-valued number in the table, larger temporal differences will reduce the priority of a match.

In another embodiment, a joint table of weights (such as that shown previously above) may be multiplied by a value having an inverse relationship with the temporal difference. Thus, the greater the temporal difference the more the weight will be reduced.

Note that the consideration of the temporal proximity between the observation and the records can be done in addition to the contextual determination of how to prioritise different sources of data, as described previously, above.

In the embodiments described above, the examples were given of a PND or a package tracking device, for a parcel. However, the invention can be usefully applied with a much wider variety of devices. For example, a camera could be equipped to take measurements of wireless signals, in order to determine the location at which a photograph is taken. Correspondingly, a shared database for camera users would represent the common locations for taking photographs. This emphasises the benefits of adapting the type of shared database to the usage pattern, or type, of the device.

In the embodiments contemplated above, an indication of the identity or type of a device may be a label, such as a code identifying a particular product or manufacturer. However, in other embodiments, the indication could equally comprise specific parameters of a device or software application. For example: a device might be identified by parameters such as antenna size or gain, or receiver sensitivity.

The source of a record can also be characterised in other ways. For example, a user or use of a device might be characterised by a maximum speed of movement. This might be appropriate to distinguish between positioning devices associated with particular activities, such as golf, walking, running, cycling or driving. Any of these parameters can form useful criteria for clustering groups of devices.

The indication of source may also include details of the configuration or the mode of operation of the hardware of software responsible for creating a record. In this way, the indication of source for a particular device may vary with usage. For example the indication of source may be changed when a particular software application is running, or when a portable device is used with a power supply connected, instead of being powered by its own internal battery.

Other detailed indications of source can be imagined - for example, when a device is connected to a specific power supply such as a car power adaptor (car charger). In this mode of operation the device is a member of a group of powered devices, and has location in common with other vehicular devices. The typical locations for such a group are along the roads and in car parks (when in the car). In contrast, when the same device is connected to a mains power supply, the more likely locations are indoors, such as at home or in the office. Meanwhile, when the device is using its internal battery supply the typical locations for the user and collected in the group are different - walking around town, inside shopping malls, coffee shops, theatres, airports and so on.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of estimating the position of an electronic device, comprising:
receiving an observation including the identity of at least one wireless transmitter detected by the device at the position to be estimated;
comparing the observation with a plurality of records, each record comprising the identity of one or more wireless transmitters and a corresponding position, the position being based on a location or set of locations at which the one or more transmitters were detected;
detecting a first match between the observation and a first record, the first record comprising a corresponding first position;
determining a quality characteristic of the first match;
determining a first indication about a first device which contributed to the first record;
detecting a second match between the observation and a second record, the second record comprising a corresponding second position;
determining a quality characteristic of the second match;
determining a second indication about a second device which contributed to the second record, wherein the second indication is different from the first indication; and
estimating the position of the electronic device based on at least one of the first and second positions, depending upon the first indication, the quality characteristic of the first match, the second indication and the quality characteristic of the second match,
wherein the quality characteristic of the first match and second match comprises a measure of how specific each match is, and
wherein when the first and second indications suggest that the first device is more closely related to the electronic device than the second device:
if the second match is more specific than the first match, then the estimation of the position of the electronic device is based preferentially on the second position; and
otherwise, the estimation is based preferentially on the first position.

2. The method of claim 1, wherein the measure of how specific each match is, comprising at least one of:
a degree of similarity between the set of at least one identity comprised in the observation and the set of one or more identities comprised in the matched record; and
a degree of geographic precision implied by the match.

3. The method of claim 2, wherein the identity of each transmitter has a hierarchical structure, whereby successive levels of the hierarchy correspond to successively more limited geographic areas; and
wherein the measure of specificity of the match is based on the degree of similarity between the hierarchical identity of the at least one transmitter in the observation and hierarchical identity of the one or more transmitters in the matched record.

4. The method of any of claims 1 to 3, wherein at least one of the first and second indications indicates at least one of:
the identity of the respective first or second device;
the identity of a software program which caused said device to contribute the record and
a group to which said device or software program belongs,
wherein said group is preferably associated with at least one of:
a type of said device or software program; and
a user or group of users with which said device or software program are associated.

5. The method of claim 4, wherein:
the first indication indicates that the first device is the electronic device itself; and preferably
the second indication indicates that the second device is one or more devices among a limited group of devices.

6. The method of any preceding claim, wherein at least one of the first and second indications comprises a label in the respective matched record.

7. The method of any preceding claim, wherein the step of estimating the position of the electronic device comprises a linear or non-linear combination of the first and second positions.

8. The method of claim 7, wherein:
the position corresponding to each match is assigned a priority,
wherein each priority is based jointly on:
the quality characteristic of the match; and
the respective indication about the device which contributed to the corresponding record, and
the step of estimating the position of the electronic device comprises selecting the position having the highest priority.

9. The method of claim 7, wherein:
the position corresponding to each match is assigned a weight, wherein each weight is based jointly on:
the quality characteristic of the match; and
the respective indication about the device which contributed to the corresponding record, and
the step of estimating the position of the electronic device comprises calculating a weighted average of the positions according to the assigned weights.

10. The method of any preceding claim, further comprising submitting data to the plurality of records, the data comprising:
the observation;
an estimate of the position of the electronic device; and preferably
a label identifying at least one of: the electronic device; its type; or a group of devices to which it belongs.

11. A computer program comprising computer program code means adapted to perform all the steps of any preceding claim when said program is run on a computer.

12. A computer program as claimed in claim 11 embodied on a computer readable medium.

13. A portable device, comprising:
a wireless receiver, adapted to observe the identity of at least one wireless transmitter detectable by the device at a position to be estimated;
a query processor, operable to issue the observed identity as a query to be compared with a plurality of records, each record comprising the identity of one or more wireless transmitters and a corresponding position, the position being based on a location or set of locations at which the one or more transmitters were detected,
the query processor being operable to receive, in response to the query, the result of a first match between the observation and a first one of the records, the result comprising:
a first indication about a first device which contributed to the first record;
a first position estimate, being the position corresponding to the first record,
the query processor also being operable to receive, in response to the query, the result of a second match between the observation and a second one of the records, the result comprising:
a second indication about a second device which contributed to the second record, wherein the second indication is different from the first indication;
a second position estimate, being the position corresponding to the second record,
the query processor further being adapted to determine a quality characteristic of the first match and of the second match; and
a position estimator, adapted to estimate the position of the portable device based on at least one of the first position estimate and the second position estimate, depending upon the first indication, the quality characteristic of the first match, the second indication and the quality characteristic of the second match,
wherein the quality characteristic of the first match and second match comprises a measure of how specific the match is, and
wherein when the first and second indications suggest that the first device is more closely related to the electronic device than the second device:
if the second match is more specific than the first match, then the estimation of the position of the electronic device is based preferentially on the second position; and
otherwise, the estimation is based preferentially on the first position.

14. The portable device of claim 13, further comprising an onboard memory, for storing the whole or part of the plurality of records.

## Patentansprüche

1. Verfahren zum Abschätzen der Position einer elektronischen Vorrichtung, umfassend:
Empfangen einer Beobachtung einschließlich der Identität von mindestens einem drahtlosen Sender, der von der Vorrichtung an der abzuschätzenden Position erfasst wird;
Vergleichen der Beobachtung mit einer Vielzahl von Aufzeichnungen, wobei jede Aufzeichnung die Identität von einem oder mehreren drahtlosen Sendern und eine entsprechende Position umfasst, wobei die Position auf einer Stelle oder einer Gruppe von Stellen basiert, an der der eine oder mehrere Sender erfasst wurden;
Erfassen einer ersten Übereinstimmung zwischen der Beobachtung und einer ersten Aufzeichnung, wobei die erste Aufzeichnung eine entsprechende erste Position umfasst;
Ermitteln eines Qualitätsmerkmals der ersten Übereinstimmung;
Ermitteln einer ersten Angabe zu einer ersten Vorrichtung, die zu der ersten Aufzeichnung beigetragen hat;
Erfassen einer zweiten Übereinstimmung zwischen der Beobachtung und einer zweiten Aufzeichnung, wobei die zweite Aufzeichnung eine entsprechende zweite Position umfasst;
Ermitteln eines Qualitätsmerkmals der zweiten Übereinstimmung;
Ermitteln einer zweiten Angabe zu einer zweiten Vorrichtung, die zu der zweiten Aufzeichnung beigetragen hat, wobei sich die zweite Angabe von der ersten Angabe unterscheidet; und
Abschätzen der Position der elektronischen Vorrichtung, die auf mindestens einer der ersten und zweiten Positionen basiert, abhängig von der ersten Angabe, dem Qualitätsmerkmal der ersten Übereinstimmung, der zweiten Angabe und dem Qualitätsmerkmal der zweiten Übereinstimmung,
wobei das Qualitätsmerkmal der ersten Übereinstimmung und der zweiten Übereinstimmung einen Maßstab dafür umfasst, wie spezifisch jede Übereinstimmung ist, und
wobei, wenn die ersten und zweiten Angaben darauf hindeuten, dass die erste Vorrichtung in engerem Zusammenhang mit der elektronischen Vorrichtung als die zweite Vorrichtung ist:
wenn die zweite Übereinstimmung spezifischer als die erste Übereinstimmung ist, basiert die Abschätzung der Position der elektronischen Vorrichtung vorzugsweise auf der zweiten Position; und andernfalls basiert die Abschätzung vorzugsweise auf der ersten Position.

2. Verfahren nach Anspruch 1, wobei der Maßstab dafür, wie spezifisch jede Übereinstimmung ist, mindestens eines der Folgenden umfasst:
einen Ähnlichkeitsgrad zwischen der Gruppe von mindestens einer Identität, die die Beobachtung umfasst, und der Gruppe von einer oder mehreren Identitäten, die die übereinstimmende Aufzeichnung umfasst; und
einen Grad an geographischer Genauigkeit, die die Übereinstimmung mit sich bringt.

3. Verfahren nach Anspruch 2, wobei die Identität jedes Senders eine hierarchische Struktur aufweist, wobei aufeinander folgende Ebenen der Hierarchie schrittweise stärker begrenzten geographischen Gebieten entsprechen; und
wobei der Maßstab dafür, wie spezifisch die Übereinstimmung ist, auf dem Ähnlichkeitsgrad zwischen der hierarchischen Identität von dem mindestens einen Sender in der Beobachtung und der hierarchischen Identität von dem einen oder mehreren Sendern in der übereinstimmenden Aufzeichnung basiert.

4. Verfahren nach einem der Ansprüche 1 bis 3, wobei mindestens eine der ersten und zweiten Angaben mindestens eines der Folgenden angibt:
die Identität der jeweiligen ersten oder zweiten Vorrichtung;
die Identität eines Softwareprogramms, das bewirkt hat, dass die Vorrichtung die Aufzeichnung beiträgt, und
eine Gruppe, zu der die Vorrichtung oder das Softwareprogramm gehört,
wobei die Gruppe vorzugsweise mit mindestens einem der Folgenden verbunden ist:
einem Typ der Vorrichtung oder des Softwareprogramms; und
einem Benutzer oder einer Gruppe von Benutzern, mit dem bzw. der die Vorrichtung oder das Softwareprogramm verbunden ist.

5. Verfahren nach Anspruch 4, wobei:
die erste Angabe angibt, dass die erste Vorrichtung die elektronische Vorrichtung selbst ist; und vorzugsweise
die zweite Angabe angibt, dass die zweite Vorrichtung eine oder mehrere Vorrichtungen in einer begrenzten Gruppe von Vorrichtungen ist.

6. Verfahren nach einem der vorangehenden Ansprüche, wobei mindestens eine der ersten und zweiten Angaben eine Markierung in der jeweiligen übereinstimmenden Aufzeichnung umfasst.

7. Verfahren nach einem der vorangehenden Ansprüche, wobei der Schritt des Abschätzens der Position der elektronischen Vorrichtung eine lineare oder nichtlineare Kombination der ersten und zweiten Positionen umfasst.

8. Verfahren nach Anspruch 7, wobei:
der Position, die der jeweiligen Übereinstimmung entspricht, eine Priorität zugewiesen wird,
wobei jede Priorität gemeinsam auf Folgendem basiert:
dem Qualitätsmerkmal der Übereinstimmung; und
der jeweiligen Angabe zu der Vorrichtung, die zur entsprechenden Aufzeichnung beigetragen hat, und
der Schritt des Abschätzens der Position der elektronischen Vorrichtung das Auswählen der Position mit der höchsten Priorität umfasst.

9. Verfahren nach Anspruch 7, wobei:
der Position, die der jeweiligen Übereinstimmung entspricht, eine Gewichtung zugewiesen wird, wobei jede Gewichtung gemeinsam auf Folgendem basiert:
dem Qualitätsmerkmal der Übereinstimmung; und
der jeweiligen Angabe zu der Vorrichtung, die zur entsprechenden Aufzeichnung beigetragen hat, und
der Schritt des Abschätzens der Position der elektronischen Vorrichtung das Berechnen eines gewichteten Durchschnitts der Positionen gemäß den zugewiesenen Gewichtungen umfasst.

10. Verfahren nach einem der vorangehenden Ansprüche, ferner umfassend das Übermitteln von Daten an die Vielzahl von Aufzeichnungen, wobei die Daten Folgendes umfassen:
die Beobachtung;
eine Abschätzung der Position der elektronischen Vorrichtung; und vorzugsweise
eine Markierung, die mindestens eines der Folgenden identifiziert: die elektronische Vorrichtung; ihren Typ; oder eine Gruppe von Vorrichtungen, zu denen sie gehört.

11. Computerprogramm umfassend Computerprogrammcodemittel, die angepasst sind, um alle Schritte nach einem der vorangehenden Ansprüche durchzuführen, wenn das Programm auf einem Computer ausgeführt wird.

12. Computerprogramm nach Anspruch 11, das auf einem computerlesbaren Medium verkörpert ist.

13. Tragbare Vorrichtung, umfassend:
einen drahtlosen Empfänger, der so angepasst ist, dass er die Identität von mindestens einem drahtlosen Sender beobachtet, der von der Vorrichtung an einer abzuschätzenden Position erfasst werden kann;
einen Abfrageprozessor, der dazu betrieben werden kann, die beobachtete Identität als Abfrage auszuführen, die mit einer Vielzahl von Aufzeichnungen zu vergleichen ist, wobei jede Aufzeichnung die Identität von einem oder mehreren drahtlosen Sendern und eine entsprechende Position umfasst, wobei die Position auf einer Stelle oder einer Gruppe von Stellen basiert, an der der eine oder mehrere Sender erfasst wurden,
wobei der Abfrageprozessor dazu betrieben werden kann, als Reaktion auf die Abfrage das Ergebnis einer ersten Übereinstimmung zwischen der Beobachtung und einer ersten der Aufzeichnungen zu empfangen, wobei das Ergebnis Folgendes umfasst:
eine erste Angabe zu einer ersten Vorrichtung, die zu der ersten Aufzeichnung beigetragen hat;
eine erste Positionsabschätzung, wobei die Position der ersten Aufzeichnung entspricht,
wobei der Abfrageprozessor auch dazu betrieben werden kann, als Reaktion auf die Abfrage das Ergebnis einer zweiten Übereinstimmung zwischen der Beobachtung und einer zweiten der Aufzeichnungen zu empfangen, wobei das Ergebnis Folgendes umfasst:
eine zweite Angabe zu einer zweiten Vorrichtung, die zu der zweiten Aufzeichnung beigetragen hat, wobei sich die zweite Angabe von der ersten Angabe unterscheidet;
eine zweite Positionsabschätzung, wobei die Position der zweiten Aufzeichnung entspricht,
wobei der Abfrageprozessor ferner so angepasst ist, dass er ein Qualitätsmerkmal der ersten Übereinstimmung und der zweiten Übereinstimmung bestimmt, und
einen Positionsabschätzer, der so angepasst ist, dass er die Position der tragbaren Vorrichtung basierend auf mindestens einer der ersten Positionsabschätzung und der zweiten Positionsabschätzung abschätzt, abhängig von der ersten Angabe, dem Qualitätsmerkmal der ersten Übereinstimmung, der zweiten Angabe und dem Qualitätsmerkmal der zweiten Übereinstimmung,
wobei das Qualitätsmerkmal der ersten Übereinstimmung und der zweiten Übereinstimmung einen Maßstab dafür umfasst, wie spezifisch die Übereinstimmung ist, und
wobei, wenn die ersten und zweiten Angaben darauf hindeuten, dass die erste Vorrichtung in engerem Zusammenhang mit der elektronischen Vorrichtung als die zweite Vorrichtung ist:
wenn die zweite Übereinstimmung spezifischer als die erste Übereinstimmung ist, basiert die Abschätzung der Position der elektronischen Vorrichtung vorzugsweise auf der zweiten Position; und
andernfalls basiert die Abschätzung vorzugsweise auf der ersten Position.

14. Tragbare Vorrichtung nach Anspruch 13, ferner umfassend einen Onboard-Speicher zum gesamten oder teilweisen Speichern der Vielzahl von Aufzeichnungen.

## Revendications

1. Procédé d'estimation de la position d'un dispositif électronique, comprenant :
la réception d'une observation comprenant l'identité d'au moins un émetteur sans fil détecté par le dispositif à la position à estimer ;
la comparaison de l'observation avec une pluralité d'enregistrements, chaque enregistrement comprenant l'identité d'un ou plusieurs émetteurs sans fil et une position correspondante, la position étant fondée sur un emplacement ou un ensemble d'emplacements au niveau duquel ou desquels le ou les émetteurs ont été détectés ;
la détection d'une première concordance entre l'observation et un premier enregistrement, le premier enregistrement comprenant une première position correspondante ;
la détermination d'une caractéristique de qualité de la première concordance ;
la détermination d'une première indication concernant un premier dispositif qui a contribué au premier enregistrement ;
la détection d'une seconde concordance entre l'observation et un deuxième enregistrement, le second enregistrement comprenant une deuxième position correspondante ;
la détermination d'une caractéristique de qualité de la seconde concordance ;
la détermination d'une seconde indication concernant un second dispositif qui a contribué au second enregistrement, où la deuxième indication est différente de la première indication ; et
l'estimation de la position du dispositif électronique fondé sur au moins une de la première position et de la seconde position, en fonction de la première indication, de la caractéristique de qualité de la première concordance, de la seconde indication et de la caractéristique de qualité de la seconde concordance,
où la caractéristique de qualité de la première concordance et de la seconde concordance comprend une mesure de la spécificité de chaque concordance, et
où lorsque la première indication et la seconde indication suggèrent que le premier dispositif est plus étroitement lié au dispositif électronique que le second dispositif :
si la seconde concordance est plus spécifique que la première concordance, l'estimation de la position du dispositif électronique est donc fondée préférentiellement sur la seconde position ; et sinon, l'estimation est donc fondée préférentiellement sur la première position.

2. Procédé selon la revendication 1, où la mesure de la spécificité de chaque concordance, comprenant au moins un élément parmi :
un degré de similarité entre l'ensemble d'au moins une identité comprise dans l'observation et l'ensemble d'une ou plusieurs identités comprises dans l'enregistrement apparié ; et un degré de précision géographique impliqué par la concordance.

3. Procédé selon la revendication 2, où l'identité de chaque émetteur a une structure hiérarchique, selon laquelle des niveaux successifs de la hiérarchie correspondent à des zones géographiques successivement plus limitées ; et
où la mesure de spécificité de la concordance est fondée sur le degré de similarité entre l'identité hiérarchique d'au moins un émetteur dans l'observation et l'identité hiérarchique du ou des émetteurs dans l'enregistrement apparié.

4. Procédé selon l'une quelconque des revendications 1 à 3, où au moins l'une de la première indication et de la seconde indication indique au moins un élément parmi :
l'identité du premier dispositif ou du second dispositif respectifs ;
l'identité d'un programme logiciel qui a amené ledit dispositif à fournir l'enregistrement et un groupe auquel appartient ledit dispositif ou programme logiciel, ledit groupe étant de préférence associé à au moins l'un des éléments suivants :
un type dudit dispositif ou programme logiciel ; et
un utilisateur ou un groupe d'utilisateurs, auxquels ledit dispositif ou programme logiciel est associé.

5. Procédé selon la revendication 4, où :
la première indication indique que le premier dispositif est le dispositif électronique lui-même ; et de préférence
la seconde indication indique que le second dispositif est un ou plusieurs dispositifs parmi un groupe limité de dispositifs.

6. Procédé selon l'une quelconque des revendications précédentes, où au moins une de la première indication et de la seconde indication comprend une étiquette dans l'enregistrement apparié respectif.

7. Procédé selon l'une quelconque des revendications précédentes, où l'étape d'estimation de la position du dispositif électronique comprend une combinaison linéaire ou non linéaire de la première position et de la seconde position.

8. Procédé selon la revendication 7, où :
la position correspondant à chaque concordance est affectée d'une priorité, où chaque priorité est fondée conjointement sur :
la caractéristique de qualité de la concordance ; et
l'indication respective concernant le dispositif qui a fourni l'enregistrement correspondant, et
l'étape d'estimation de la position du dispositif électronique comprend la sélection de la position ayant la priorité la plus élevée.

9. Procédé selon la revendication 7, où :
la position correspondant à chaque concordance est affectée d'une pondération, dans laquelle chaque pondération est fondée conjointement sur :
la caractéristique de qualité de la concordance ; et
l'indication respective concernant le dispositif qui a fourni l'enregistrement correspondant, et
l'étape d'estimation de la position du dispositif électronique comprend le calcul d'une moyenne pondérée des positions en fonction des pondérations attribuées.

10. Procédé selon l'une quelconque des revendications précédentes, comprenant en outre la soumission des données à la pluralité d'enregistrements, les données comprenant :
l'observation ;
une estimation de la position du dispositif électronique ; et de préférence
une étiquette identifiant au moins un élément parmi : le dispositif électronique ; son type ; ou un groupe de dispositifs auxquels il appartient.

11. Programme informatique comprenant un moyen de codage de programme informatique adapté pour exécuter toutes les étapes de l'une quelconque des revendications précédentes, lorsque ledit programme est exécuté sur un ordinateur.

12. Programme informatique selon la revendication 11 réalisé sur un support lisible machine.

13. Dispositif portatif comprenant :
un récepteur sans fil, adapté pour observer l'identité d'au moins un émetteur sans fil détectable par le dispositif à une position à estimer ;
un processeur de requêtes pouvant être mis en oeuvre pour délivrer l'identité observée en tant que requête devant être comparée à une pluralité d'enregistrements, chaque enregistrement comprenant l'identité d'un ou plusieurs émetteurs sans fil et une position correspondante, la position étant fondée sur un emplacement ou un ensemble d'emplacements auxquels le ou les émetteurs ont été détectés,
le processeur de requêtes pouvant fonctionner pour recevoir, en réponse à la requête, le résultat d'une première concordance entre l'observation et un premier des enregistrements, le résultat comprenant :
une première indication concernant un premier dispositif qui a contribué au premier enregistrement ;
une première estimation de position, étant la position correspondant au premier enregistrement, le processeur de requêtes pouvant également fonctionner pour recevoir, en réponse à la requête, le résultat d'une seconde concordance entre l'observation et un second des enregistrements, le résultat comprenant :
une seconde indication concernant un second dispositif qui a contribué au second enregistrement, dans lequel la seconde indication est différente de la première indication ;
une seconde estimation de position, étant la position correspondant au second enregistrement,
le processeur de requêtes étant en outre adapté pour la détermination d'une caractéristique de qualité de la première concordance et de la seconde concordance ; et
un estimateur de position, adapté pour estimer la position du dispositif portable fondé sur au moins l'une de la première estimation de position et de la seconde estimation de position, en fonction de la première indication, de la caractéristique de qualité de la première concordance, de la seconde indication et de la caractéristique de qualité de la seconde concordance,
où la caractéristique de qualité de la première concordance et la seconde concordance comprend une mesure de la spécificité du concordance, et
où lorsque la première indication et la seconde indication suggèrent que le premier dispositif est plus étroitement lié au dispositif électronique que le second dispositif :
si la seconde concordance est plus spécifique que la première concordance, l'estimation de la position du dispositif électronique est donc fondée préférentiellement sur la seconde position ; et sinon, l'estimation est donc fondée préférentiellement sur la première position.

14. Dispositif portable selon la revendication 13, comprenant en outre une mémoire embarquée, pour stocker la totalité ou une partie de la pluralité des enregistrements.
